# EUROPEAN PATENT APPLICATION

(11) **EP 3 131 097 A1**
(43) Date of publication of application: **15.02.2017**
(21) Application number: 15194763.7
(22) Date of filing: 16.11.2015
(51) Int. Cl.: H01B 1/22, B32B 5/00, C08J 5/04, B29C 70/00, C09D 5/24

(54) **COMPOSITE MATERIAL**

(30) Priority: 14.08.2015 GR 20150100361
(71) Applicant: Crompton Technology Group Limited, Solihul, West Midlands B90 4SS (GB)
(72) Inventor: CHATZI, Panagiota, Banbury, Oxfordshire OX16 4XD (GB); BERNARD, James, Banbury, Oxfordshire OX16 4XD (GB); GIANNAKOPOULOS, Ioannis, Banbury, Oxfordshire OX16 4XD (GB)
(74) Representative: de Bresser, Sara Jean

(57) **Abstract**

The present disclosure provides a composite material comprising:
a composite substrate comprising a polymeric matrix with fibre reinforcement; a surface of the composite substrate being coated with:
a conductive layer comprising conductive particles, preferably dispersed in a polymeric matrix;
wherein the composite substrate and the conductive layer are bonded together via polymeric crosslinking.

## Description

### Technical Field

The present disclosure relates to coated composite materials and methods of manufacturing coated composite materials.

### Background

Composite materials are used to make structural components for a wide range of applications including aerospace and defence, medical imaging, clean energy technology and advanced vehicle technology, e.g. marine, automotive and motorsport. High performance composite products might include transmission shafts, suspension components, fly wheels, prop shafts and drive shafts, hydraulic accumulators and fuel pipes. Composite materials, typically comprising carbon, Kevlar and/or glass fibre reinforcement in a polymer matrix are often selected over traditional metallic materials due to higher specific stiffness and strength as well as being lighter weight. Other desirable properties of composite materials can include tuneable thermal expansion coefficients, resistivity, and their suitability for applications with complex geometries and forms.

Composite materials can provide high specific strength and stiffness but are susceptible to abrasive or erosive wear, as well as offering limited thermal resistance. The limited surface functionality of composite materials can therefore prevent their use in applications where wear resistance or thermal/electrical properties are required. For this reason, application of a hard coating on a composite surface has currently drawn great interest in the aircraft industry due to weight savings, wear resistance and improved impact properties, together with increasing the hardness of the composite. These surface coatings enhance the surface qualities of a composite substrate to provide properties such as wear resistance, thermal barrier, EMI/RFI shielding and corrosion protection.

Hard coatings are typically applied using electroplating, which requires the substrate surface, i.e. the surface to which the hard coating is to be applied, to be electrically conductive. Composite substrates typically lack the conductivity required for electroplating and thus require the use of additional interlayers of different materials. Typical interlayer combinations comprise: (i) an adhesive layer applied to the cured composite (e.g. an epoxy-based first layer); (ii) a nickel layer applied to the adhesive surface, e.g. via electroless plating; and (iii) a metal alloy layer to which the hard coating can then be applied using electroplating. The use of such interlayers renders the final part thicker and more costly due to processing time. Moreover, when failure occurs, it is generally caused by poor adhesion between one or more of the layers, either between one another or with the substrate or the top coating.

The need for multiple intermediate layers thus adds time and complexity to the coating process, and also increases the minimum achievable thickness of surface coatings.

It would be desirable to provide composite materials and coating methods for composite materials which address at least some of the problems outlined above.

### Summary

The present disclosure provides a method of adequate conductive material incorporation on the surface of an uncured composite in order to impart electrical conductivity to the composite material.

From a first aspect of this disclosure there is provided a composite material comprising:
a composite substrate comprising a polymeric matrix with fibre reinforcement; a surface of the composite substrate being coated with:
a conductive layer comprising conductive particles;
wherein the composite substrate and the conductive layer are bonded together via polymeric crosslinking.

The presence of the conductive particles in the conductive layer imparts electrical conductivity to the surface of the composite material. Preferably, the conductive particles are dispersed in a polymeric matrix. The conductive particles are preferably at least partially exposed at an outer surface of the conductive layer. The present disclosure therefore provides a composite material upon which a further coating may be applied directly, for example using electroplating. Preferably, the composite material of the present disclosure therefore further comprises a coating layer adhered to the outer surface of the conductive layer.

In contrast to prior art materials, which incorporate multiple interlayers between the composite and the outer coating, the present disclosure provides composite materials which eliminate the multiple interlayers between the coating material and the substrate, thus resulting in a smaller or lighter final product. Elimination of the multiple interlayers also achieves cost savings due to the time and cost of applying multiple interlayers being avoided. Moreover, poor adhesion between various layers, e.g. between the resin interlayer applied after curing the substrate and the composite substrate is a drawback of the currently used methods. In particular, test results show adhesion failures at the multiple interlayers. The reduction in layers achieved by the present disclosure therefore reduces the likelihood of failure of the composite material. It will be appreciated that in aerospace applications, failure of the component may represent a significant safety hazard.

From a further aspect, the present disclosure also provides a method of manufacturing a composite material, the method comprising applying a conductive layer to a surface of an at least partially uncured composite substrate;
said substrate comprising a polymeric matrix with fibre reinforcement, and
said conductive layer comprising conductive particles (preferably dispersed in a polymeric matrix)
and;
optionally further comprising depositing a coating layer on an outer surface of the conductive layer.

From an alternative aspect, the present disclosure provides a method of manufacturing a composite material, the method comprising:
forming a conductive layer comprising conductive particles (preferably dispersed in a polymeric matrix);
forming a composite substrate comprising a polymeric matrix with fibre reinforcement; and
curing the polymeric matrix of the composite substrate and optionally also the polymeric matrix of the conductive layer.

The step of applying the conductive layer to the substrate in the presently disclosed method encompasses both (a) the formation of the conductive layer with subsequent application of the composite substrate thereon and vice versa, i.e. (b) the formation of the composite substrate with subsequent application of the conductive layer thereon. That is, both layers may be formed independently and then brought into contact with one another, or one layer may be formed and the other applied or formed thereon. That is, the method comprises providing said conductive layer in contact with a surface of said at least partially uncured composite substrate. Curing the polymeric matrix of the composite substrate and curing the conductive layer (e.g. the polymeric matrix of the conductive layer), preferably simultaneously, results in the two layers being bonded together by polymeric crosslinking.

It will be appreciated that the disclosed method may take advantage of any of the materials described herein in relation to the composite substrate, conductive layer and/or coating layer and vice versa.

As noted above, poor adhesion between layers is a problem in existing materials. Effective mechanical interlock between the layers can be achieved using optimum roughness in some applications, but the secondary bonds on which this type of adhesion relies are relatively weak attractions between nearby atoms or molecules. The presently disclosed method can provide improved adhesion due to the fact that the conductive layer and the composite substrate are applied to one another. The composite substrate is at least partially uncured when it is brought into contact with the conductive layer. This means that a subsequent curing step cures both the composite substrate and the conductive layer together, resulting in improved adhesion between these layers, due to the formation of covalent bonds via crosslinking of the polymeric matrix of the composite with the conductive layer (e.g. with its polymeric matrix). Thus, the composite substrate and the conductive layer are bonded together via polymeric crosslinking, i.e. via covalent bonds and, accordingly, processing defects such as delamination can be avoided. A coating layer such as a metallic coating may then be reliably adhered to a surface of a composite substrate without the need for multiple intermediate layers or graded layers.

Thus, in a preferred aspect, the conductive layer is cured after it has been applied to a surface of the composite substrate (i.e. it is at least partially uncured at the time of application). More preferably, the composite substrate is cured simultaneously with the conductive layer.

The conductive layer comprises conductive, i.e. electrically conductive, particles, preferably dispersed in a polymeric matrix. Optionally, other materials may be present in the layer (e.g. fibres, such as those typically herein described as used to reinforce composites), however, preferably the conductive layer consists essentially of the conductive particles and a polymeric matrix. The term "dispersed therein" is intended to encompass both the situation where all, or substantially all, of the particles are surrounded by polymeric matrix; and the situation where some particles are only partially surrounded by matrix, e.g. where they are embedded in said matrix, but at least partially exposed at a surface of the conductive layer.

The polymeric matrix of the conductive layer can comprise (i.e. comprise, consist essentially of, or consist of) the same polymer(s) as, or different polymer(s) to, the polymeric matrix of the composite substrate. The polymeric matrix may comprise any suitable polymeric material provided it is compatible with the composite substrate and will adequately adhere to a surface thereof. The matrix may consist of one or more types of polymer. Preferably, the polymeric matrix comprises a thermoset material. In one example the polymeric matrix may consist of thermoset material(s) that are temperature-resistant. Examples of suitable polymers are epoxy resins (e.g. epoxy anhydrides), polyester resins, phenolic resins, vinyl esters; Bis-Maleimids (BMI); polyether ether ketones (PEEK); poly ether ketone-ketones (PEKK); polyphenylene sulfides (PPS); etc.

Most preferably, the polymer matrix comprises a cross-linked epoxy resin, such as an epoxy anhydride. The polymeric matrix of the composite substrate is preferably identical to that used in the conductive layer (albeit lacking the conductive particles and instead containing a reinforcing fibre).

Other components such as curing agents, cross-linking agents, etc. may also be present in one or both of the polymer matrices.

The conductive particles may comprise any suitable electrically conductive material, including one or more different materials. Examples are metal or non-metal conductive materials, preferably metals. Preferred metals are Ag, Ni, Co, Cu and alloys and mixtures thereof, especially copper. Non-metal conductive materials include carbon nanotubes, carbon nano fibres, carbon black, graphene, or graphite.

The conductive particles may be in the form of rods, spheres, platelets or agglomerates. Alternatively, or in addition, the conductive particles may be fibrous, e.g. comprising continuous, long, short and/or chopped fibres. Preferably the particles are substantially spherical, for example with a mean particle diameter of 5 to 200 µm, preferably 10 to 100 µm, especially preferably 40 to 70 µm.

The proportion of conductive particles in the conductive layer may vary depending on the identity of the substrate and the eventual top coating. In one aspect, the conductive layer may consist of or consist essentially of conductive particles. Preferably, however, the conductive layer comprises other components, most preferably a polymeric matrix in which the particles are dispersed or embedded. In this embodiment, typical amounts of conductive particles in the conductive layer, expressed as weight percentage of the conductive layer as a whole are up to 50% wt, preferably 1 to 20 %wt, e.g. up to 10 %wt, more preferably 2 to 5 %wt.

Where the conductive particles are dispersed in the polymeric matrix, they may be dispersed in the polymeric matrix before, during or after being brought into contact with the composite substrate. For example, the particles may be applied to the composite substrate, e.g. by spraying conductive particles onto the substrate, and then the whole product dipped in a bath of polymeric matrix material. However, this may result in voids which are not adequately filled with the matrix material. Alternatively, the conductive particles may be applied to the composite substrate, e.g. to the uncured outside diameter of a composite part. Suitable methods for this include spraying the particles onto the composite substrate. In embodiments where the conductive layer comprises polymer matrix, further polymer may then be applied (i.e. as the polymer matrix of the conductive layer), or the polymer matrix of the composite substrate (to which the particles have been applied) may act as the polymer matrix of the conductive layer. Thus, preferably the conductive particles are sprayed onto said surface of said at least partially uncured composite substrate. Alternatively, the polymeric matrix material may be applied simultaneously with the application of the particles. However, this can be a messy process and results in a rough finish. For the smoothest finish and the most uniform filling between particles, it is preferred that the particles are first dispersed in the polymeric matrix material and then the polymeric matrix material containing the particles is formed into the conductive layer. In a preferred aspect, the conductive particles are dispersed in a polymeric matrix, forming a mixture, e.g. a suspension, this being preferably carried out prior to the composite substrate and conductive layer being brought into contact with one another. Such a mixture, e.g. a suspension, can be made by mixing the required amount of conductive particles in the polymer phase which is typically a thick liquid. The mixture can be formed through mechanical mixing, shear mixing, magnetic mixing, ultra-sonication or a combination of all of these methods, until adequate dispersion of conductive particles in the desired polymer is achieved.

The conductive layer, e.g. in the form of a suspension of conductive particles dispersed in a polymer phase, may be applied to the composite substrate by any suitable means. Typically, the conductive layer may be formed and then the composite substrate applied thereon, or vice versa. Alternatively, each layer may be formed independently and the two formed layers may be brought together. Although multiple layers of conductive layer may be used, a single layer will normally be most weight efficient. Suitable techniques include painting, spraying, winding and spreading onto the surface of the composite substrate or onto another surface, i.e. that of a removable mould, tool or mandrel. In order to adjust the viscosity of the layer in order to facilitate application, further components such as solvents or thickening agents may be applied.

Preferably, said conductive particles are dispersed in the polymeric matrix of the conductive layer prior to, or during, the step of applying the conductive layer to said surface of said at least partially uncured composite substrate, i.e. the conductive particles are dispersed in the polymeric matrix of the conductive layer during manufacturing of the conductive layer or the composite material. For example, the conductive layer may be formed by pulling a fibre tow through a mixture as herein described, e.g. a suspension of conductive particles in polymeric matrix. Said fibre may be any typically used in fibre reinforced composites. This method is therefore similar to wet filament winding where the resin bath comprises not only resin (i.e. polymer matrix) but also conductive particles, e.g. dispersed therein. The wound filament is thus coated with polymer matrix and conductive particles, thus forming a conductive layer. As described herein, this may be carried out on top of a composite substrate, or the composite substrate may be applied onto the formed conductive layer. Formation of the composite substrate may involve any suitable method, for example wet filament winding using a resin bath.

Alternatively, or additionally, preimpregated tape winding may be used to form the conductive layer, in which case the preimpregated tape may incorporate the conductive particles during the winding, i.e. it comprises conductive particles prior to the step of forming the conductive layer or the composite material. The conductive layer may preferably therefore comprise conductive particles, a polymeric resin and fibres as herein described, for example where the conductive layer is formed from a preimpregnated tape. Alternatively, the conductive layer may be a laminate, e.g. a flat laminate comprising fibres and conductive particles.

The surface texture of the conductive layer may be approximately homogenous overall, e.g. characterised by a definable texture depth or other texture parameter. It is also preferable for the conductive layer to have a repeatable thickness, e.g. when making composite materials for multiple components that must be coated within certain tolerance ranges. Preferably, the conductive layer has a substantially constant thickness. Typical average thicknesses for the conductive layer are 5 µm to 2000 µm, e.g. 5 µm to 200 µm or 25 µm to 150 µm, preferably 50 µm to 2000 µm, especially 100 µm to 500 µm. The conductive layer is preferably at least substantially continuous.

According to this disclosure, various composite components may be made.

In some examples a composite component may comprise a cylinder of composite material, wherein the conductive layer is formed on an outside surface of the cylinder. In other examples, a composite component may comprise a hollow cylinder of composite material, wherein the conductive layer is formed on an internal surface of the cylinder.

Thus the conductive layer may be formed either on the outside of a cylinder (which may be hollow, especially if formed by winding on a tool such as a mandrel) such as may be used for piston shafts or actuator rods, or on the inside of a hollow cylinder such as may be used as a piston bore or hydraulic cylinder. Each type of component may benefit from the addition of hard, wear-resistant coatings for improved component lifetimes.

As noted above, the order in which the conductive layer and the composite substrate are formed is flexible. In some preferred examples the conductive layer is formed first and the composite substrate layer is formed on top of the conductive layer. This order is most suitable for forming hollow cylinders such as actuator cylinder bores that require a coating to be formed on the inside surface (bore surface) of the cylinder. The conductive particle layer may be applied onto a tool, e.g. a mould or mandrel in known fashion. The composite substrate may then be formed on top of the conductive layer by winding fibres coated in polymeric matrix onto the conductive layer in a similar fashion to the conventional mandrel winding techniques (the winding may be hoop winding for maximum circumferential strength, or the winding may be helical winding of various helix angles for greater tension/compression strength, or various combinations or layers of different winding styles). In a preferred aspect, e.g. where metal particles are used, the tool, e.g. a mould or mandrel, may be magnetized. This brings the particles close to the surface, breaking the resin film between the tool and the composite substrate and forms a network of interconnected particles at the surface of the conductive layer adjacent to the tool, e.g. mould or mandrel. The magnetic property of the tool may then be switched off in order to enable extraction, preferably after polymer curing. Switching off of the magnetic property may be achieved by soft iron shaft rotated to close the field between the poles. If non-magnetic particles are to be used, the process can continue normally without using magnetism.

In other examples, the composite substrate layer may be formed first and the conductive layer is formed on top of the composite substrate layer. The composite substrate may be formed by winding fibres coated in polymeric matrix onto a mandrel or other suitable tool in known fashion (the winding may be hoop winding for maximum circumferential strength, or the winding may be helical winding of various helix angles for greater tension/compression strength, or various combinations or layers of different winding styles). The conductive layer may then be applied on top of the composite substrate layer, preferably directly after the composite manufacturing technique. Such examples are most suited to shafts or rods such as actuator rods which require a coating on the exterior surface.

Thus, as noted above, the step of applying the conductive layer to the substrate in the presently disclosed method encompasses both (i) the formation of the conductive layer with subsequent application of the composite substrate thereon and vice versa, i.e. (ii) the formation of the composite substrate with subsequent application of the conductive layer thereon. Alternatively, the two layers are each formed independently before being brought together. Viewed from a further aspect of the method, the conductive layer is formed first and the composite substrate layer is then formed on top of, or brought into contact with, the conductive layer. Viewed from a yet further aspect, the composite substrate layer is formed first and the conductive layer is then formed on top of, or brought into contact with, the composite substrate layer.

The polymeric matrix of the composite substrate and preferably also that of the conductive layer is/are at least partially uncured when they are brought into contact with each other, so that a single curing step causes cross-linking between the two matrices resulting in strong bonding as discussed above.

In a preferred aspect the method of the present disclosure comprises a curing step, after the conductive layer and the composite substrate have been applied to one another, i.e. brought into contact with one another, but preferably prior to application of any further layers. Curing involves the hardening of the polymeric material by cross-linking of polymer chains. This may be brought about using any suitable technique, preferably by heating. Any suitable time and temperatures may be used. Preferably, the conductive layer and/or the composite substrate are substantially fully cured, e.g. fully cured, in the products of the present disclosure and following the curing step of the present method, i.e. the crosslinking process is substantially complete.

Typical curing steps comprise heating to 100 to 200 °C, especially, 120 to 180 °C, e.g. 130 to 150 °C for 1 to 6 hours, preferably 2 to 4 hours.

In order to optimise the electrical conductivity of the conductive layer, e.g. to enable its use a substrate for electroplating, the conductive particles are preferably at least partially exposed at an outer surface of the conductive layer. This may be achieved prior to or after curing. Prior to curing, the particles, if magnetic, may be brought to the surface of the conductive layer using a magnet, e.g. by magnetizing the tool, e.g. mandrel or other article such as a mould, to which the conductive layer is applied in a method similar to that described above. Steps, preferably used after curing, include at least partially exposing the conductive particles, e.g. by removing material from the conductive layer. The material removal may be by any suitable process such as machining, etching or keying. These may result in a roughened surface which may be useful for bonding some types of coating. However, in other cases, especially for thinner coatings, a material removal technique that results in a smooth finish is preferred, such as grinding or honing.

The composite substrate may comprise a range of different materials for the polymeric matrix and fibre reinforcement. The composite substrate may be a laminate, or a carbon fibre reinforced polymer/plastic (CFRP). The polymeric matrix of the composite substrate may consist of one or more polymeric materials selected from, for example, those discussed above in relation to the polymer matrix of the conductive layer. The respective polymer matrices (i.e. that of the composite substrate and the conductive layer) may be different, but preferably they are identical or at least compatible with one another in order to facilitate cross-linking between the composite substrate and the conductive layer. The fibre reinforcement may consist of one or more of: filaments, glass fibres; carbon fibres; aramid e.g. Kevlar fibres. However it will be appreciated that the present disclosure will find use with a wide range of composite substrate materials.

The composite substrate may be produced via any suitable technique, e.g. filament winding, brading, RTM, AFP, etc.

Further, as discussed herein, the disclosure provides a material in which a further coating is deposited on an outer surface of the conductive layer.

The coating layer adhered to the outer surface of the conductive layer may of course comprise one or more coating layers. However, it is an advantage of the present disclosure that the conductive layer enables a single coating layer to be adhered to a composite substrate without necessarily requiring multiple intervening layers for reliable deposition of the coating layer to be achieved. The coating layer may comprise any suitable material(s) which would impart the desired properties to the composite. Coating materials suitable for deposition on a surface of a composite substrate may include metals, alloys, ceramics (such as carbides, metal oxides etc.), and even plastics and composites.

Suitable hard coatings include metals and alloys, for example micro- or nano-crystalline metals and/or alloys or amorphous metal and/or alloy coatings. Preferably the coating comprises one or more metals selected from Ag, Al, Au, Co, Cr, Cu, Fe, Ni, Mo, Pd, Rh, Ru, Sn, Ti, W, Zn and Zr. The coating may also comprise one or more non-metallic elements, for example one selected from B, C, H, O, P and S. Especially preferred is a cobalt phosphorus alloy, for example nano-crystalline Co-P, which provides protection against corrosion and wear.

Carbide coatings may be chosen to provide hardness and wear resistance. For example, tungsten carbide may be an especially effective wear resistant coating, offering exceptionally high hardness levels (up to 74 HRC hardness). Tungsten carbide is also highly resistant to extreme temperatures up to 650 °C and corrosive environments. Metal oxides such as chromium oxide are also very hard and very resistant to chemical attack, so they may be applied as a coating layer when wear and corrosion are both present. Aluminium oxide and yttria-stabilised zirconia may be used as a coating material. Several metals (such as aluminium, zinc, tungsten, etc.) and even some plastics may also be used to provide a wear resistant coating layer. In one example the coating layer consists of a metallic, ceramic or composite thermal spray coating.

The coating layer(s) may be deposited on the outer surface of the conductive layer using any suitable coating technique. More preferably, this coating step takes place after curing, although not necessarily directly after. For example, the coating layer may be deposited by one or more other methods such as electroplating, physical vapour deposition, chemical vapour deposition or sputtering. The method and product of the present disclosure are particularly suited to coating techniques that require an electrically conductive substrate, e.g. electroplating and/or electroless plating.

Electroplating is a well-known method in the art for applying electrically conductive coatings to substrates. It involves the reduction of metal cations from a solution to form a coating of said metal on the cathode of an electrical circuit. Thus, the conductive layer of the present disclosure, more specifically the conductive particles, acts as the cathode for any electroplating step. The anode will typically be made of the material to be plated on the part (or said material will be connected to the anode).

In general, prior to electroplating, cleaning of the electrode that needs to be plated is typically carried out in order to ensure good metal bond formation. In this disclosure, this may be achieved by the optional steps described above for enabling exposure of the conductive particles at the layer surface.

Typically the composite material comprising the conductive layer and the composite substrate will be placed in contact with the cathode and immersed in an electroplating solution. Any areas that are not intended to be coated may be masked. It will be understood that the materials selected as the cathode (e.g. the conductive particles), the anode (e.g. the material to be applied as coating) and electrolyte should be compatible with each other according to the reactivity series.

Alternatively, or in addition, the coating layer(s) may be deposited by a thermal spraying technique. Suitable thermal spraying techniques may include, for example, wire arc spraying e.g. twin wire arc spraying (TWAS), high velocity oxy-fuel (HVOF) spraying, plasma spraying, flame spraying, detonation spraying, warm spraying.

Mechanical adhesion of the coating layer to the conductive layer may be tested using standard techniques such as a four-point bend test, for example, to test how many cycles in four-point bending can be undergone without delamination of the coating layer. The pull-off strength of a coating layer may be tested using standard methods such as outlined by e.g. ASTM D4541.

As is already discussed above, the presently disclosed method enables a coating layer to be consistently and reliably adhered to a surface of a composite substrate via the intervening conductive layer. Such a method may be readily automated to reduce labour and standardise manufacturing processes.

In one example, the disclosed method may further comprise preparing a surface of the composite substrate before the surface is contacted with the conductive layer. For example, one or more surfaces of the composite substrate may be machined to precise dimensions if it is not keyed from as-moulded.

The present disclosure also extends to a coated composite material made according to the method(s) disclosed above.

The coated composite materials and manufacturing methods disclosed herein may be used to manufacture a wide range of composite components. Thus, according to a yet further aspect, this disclosure provides a composite component made from any of the composite materials described herein. One preferred component comprises a cylinder of composite material as herein described, wherein the conductive layer is formed on an outside surface of the cylinder. An alternative component comprises a hollow cylinder of composite material as herein described, wherein the conductive layer is formed on an internal surface of the cylinder.

Such coated composite materials may be particularly well-suited as multifunctional composites that can provide wear resistance in addition to high specific strength and stiffness. The present disclosure includes components made from a coated composite material, such as actuator cylinders for heavy duty use, automated suspension parts, wear rings, etc. Such coated composite components may find use in heavy duty vehicles, automotives, and actuation, landing gear and other aircraft applications that require wear resistance. The coated composite materials disclosed herein may be used to manufacture any wear resistant composite component, including new components, spare parts and retrofits.

It will be appreciated that the disclosed method may take advantage of any of the materials described above in relation to the composite substrate, conductive layer and/or coating layer. Likewise, features disclosed in relation to the method are also relevant to the products.

### Brief Description of the Drawings

One or more non-limiting examples will now be described, with reference to the accompanying drawings, in which:
Figure 1 illustrates a cross-section of a coated composite material according to the prior art; and
Figure 2 illustrates a cross-section of an exemplary coated composite material according to the present disclosure.

### Detailed Description

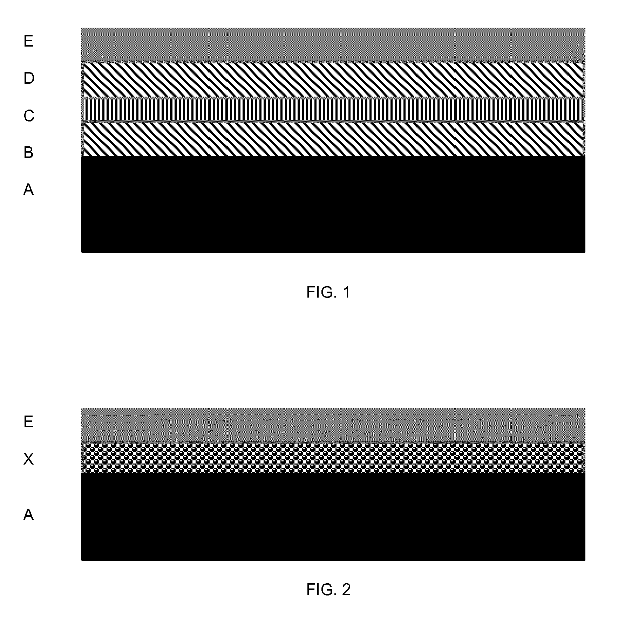

As is already discussed above, Figure 1 illustrates a prior art arrangement of a coated composite material comprising layers A to E. The lowermost composite substrate A is coated with intermediate layers B, C and D before an upper coating layer E, such as a metallic coating, is applied, e.g. by electroplating. The intermediate layer B is required to act as an adhesive enabling layer C to be bonded to the structure. Layer C is typically a nickel layer, applied by electroless plating and is required in order to provide a suitable surface for layer D, e.g. copper, to be applied via electroplating. Layer D is required in order to provide a suitable surface for applying the top coating layer. The intermediate layers B, C and D may add undesirable thickness to the surface of the composite substrate A.

Figure 2 illustrates a coated composite material according to an example of the present disclosure, wherein a composite substrate A is coated with a conductive layer X before adhering a top coating layer E to the outer surface of the conductive layer X. Once the conductive layer X has been applied to a surface of the composite substrate A, the top coating layer E may be deposited using standard techniques such as electroplating, ensuring good adhesion of the top coating layer E.

It will be understood that the description above relates to a non-limiting example and that various changes and modifications may be made from the arrangement shown without departing from the scope of this disclosure, which is set forth in the accompanying claims.

## Claims

1. A composite material comprising:
a composite substrate comprising a polymeric matrix with fibre reinforcement; a surface of the composite substrate being coated with:
a conductive layer comprising conductive particles, preferably dispersed in a polymeric matrix;
wherein the composite substrate and the conductive layer are bonded together via polymeric crosslinking.

2. The composite material according to claim 1, wherein said conductive particles are at least partially exposed at an outer surface of the conductive layer.

3. The composite material according to claim 1 or claim 2, further comprising a coating layer adhered to the outer surface of the conductive layer.

4. The composite material according to any one of the preceding claims, wherein the conductive layer has a substantially constant thickness.

5. The composite material according to any one of the preceding claims, wherein the conductive particles are metal particles.

6. The composite material according to any one of the preceding claims, wherein the polymeric matrix of the composite substrate and/or the polymeric matrix of the conductive layer comprises one or more polymers selected from epoxy resins, polyester resins, phenolic resins, vinyl esters; Bis-Maleimids (BMI); polyether ether ketones (PEEK); poly ether ketone-ketones (PEKK) and polyphenylene sulfides (PPS).

7. A method of manufacturing a composite material, the method comprising applying a conductive layer to a surface of an at least partially uncured composite substrate;
said substrate comprising a polymeric matrix with fibre reinforcement, and
said conductive layer comprising conductive particles, preferably dispersed in a polymeric matrix.

8. The method according to claim 7 wherein said conductive particles are dispersed in the polymeric matrix of the conductive layer prior to, or during, the step of applying the conductive layer to said surface of said at least partially uncured composite substrate.

9. The method according to claim 7 or claim 8 wherein said conductive particles are sprayed onto said surface of said at least partially uncured composite substrate.

10. The method according to any one of claims 7 to 9, wherein said conductive particles are at least partially exposed at an outer surface of the conductive layer.

11. The method according to any one of claims 7 to 10, further comprising curing the conductive layer after it has been applied to a surface of the composite substrate.

12. The method according to any one of claims 7 to 11, wherein the composite substrate is cured simultaneously with said conductive layer.

13. The method according to any one of claims 7 to 12, further comprising depositing a coating layer on an outer surface of the conductive layer, preferably by electroplating.

14. A composite material manufactured according to the method of any of claims 7 to 13.

15. A composite component made from a composite material according to any of claims 1 to 6 or 14.
